# EUROPÄISCHE PATENTANMELDUNG

(11) **EP 1 905 306 A2**
(43) Veröffentlichungstag der Anmeldung: **02.04.2008**
(21) Anmeldenummer: 07017692.0
(22) Anmeldetag: 11.09.2007
(51) Int. Cl.: A21C 3/02

(54) **Vorrichtung zur Erzeugung und Bereitstellung eines kontinuierlichen Teigbandes**

(30) Priorität: 29.09.2006 DE 102006046504
(71) Anmelder: Werner & Pfleiderer Lebensmitteltechnik GmbH, 91550 Dinkelsbühl (DE)
(72) Erfinder: Fiedler, Rudolf, 91731 Langfurth (DE); Mülders, Herbert, 52222 Stolberg (DE)
(74) Vertreter: Hofmann, Matthias

(57) **Zusammenfassung**

Eine Vorrichtung zur Erzeugung und Bereitstellung eines kontinuierlichen Teigbandes (18) hat einen Teigbehälter (2) zur Aufnahme einer Teigmasse. Mindestens ein Paar (8, 9) von beabstandeten, gegenläufig angetriebenen Andrückwalzen (4 bis 7) ist vorgesehen, zwischen denen die Teigmasse zur Bildung eines Teigbandes (18) hindurchgefördert wird. Zur Abförderung des gebildeten Teigbandes (18) dient eine Fördereinrichtung (19). Jeder Andrückwalze (4 bis 7) mindestens des Abschlusspaares (9) von Andrückwalzen (6, 7), welches der Fördereinrichtung (19) benachbart ist und das Teigband (18) an die Fördereinrichtung (19) übergibt, ist mindestens ein stationärer Abstreifer (21, 22) zum Abstreifen von Teigresten von einer Mantelwand (23) der Andrückwalze (6, 7) zugeordnet. Eine Einstelleinrichtung ist mit mindestens einem der Abstreifer (21, 22) zur während des Andrückens der Teigmasse erfolgenden Vorgabe einer Umfangsposition des Abstreifers (21, 22) auf der Andrückwalze (6, 7) verbunden, an der der Abstreifer (21, 22) das Teigband von der Andrückwalze (6, 7) abstreift. Es resultiert eine Vorrichtung, deren Umstellungsaufwand bei einer gewünschten Änderung von Teigband-Parametern gering ist.

## Beschreibung

Die Erfindung betrifft eine Vorrichtung zur Erzeugung und Bereitstellung eines kontinuierlichen Teigbandes nach dem Oberbegriff des Anspruchs 1.

Mit der bekannten Vorrichtung kann ein Teigband mit einer definierten Stärke und einer definierten Dichte hergestellt werden. Wenn gewünscht ist, die Stärke und/oder die Dichte des Teigbandes zu verändern, sind Installationsarbeiten an Vorrichtungskomponenten erforderlich, die nur im Stillstand der Vorrichtung erfolgen können. Dies ist aufwändig.

Es ist daher eine Aufgabe der vorliegenden Erfindung, den Umstellungsaufwand für eine Vorrichtung der eingangs genannten Art bei einer gewünschten Änderung von Teigband-Parametern zu verringern.

Diese Aufgabe ist erfindungsgemäß gelöst durch eine Teigband-Erzeugungs- und Bereitstellungsvorrichtung mit den im Kennzeichnungsteil des Anspruchs 1 angegebenen Merkmalen.

Die erfindungsgemäß einstellbaren Abstreifer erlauben es, die Teigband-qualität während des Betriebs der Vorrichtung zu optimieren. So kann beispielsweise die Funktion des Abstreifers visuell in Abhängigkeit von der erzeugten Teigband-Qualität überwacht und es kann während des Betriebs eine optimale Umfangsposition eingestellt werden, also eine Position, bei der die Teigband-Qualität den Vorstellungen des Benutzers entspricht. Auch bei einem Produktionswechsel auf eine neue Konsistenz der in der Vorrichtung zu verarbeitenden Teigmasse kann die Vorrichtung ohne weiteres umgestellt werden, ohne dass die aufwändige Demontage und erneute Montage fest installierter Abstreifer erforderlich ist. Die erfindungsgemäße Vorrichtung schafft die Möglichkeit, bei verschiedenen Teigtypen jeweils eine ideale Abstreiferposition einzustellen und bei Bedarf während des Betriebs der Vorrichtung feinzujustieren. Zur Umfangspositionsvorgabe während des Andrückens kann die Einstelleinrichtung ein Betätigungselement aufweisen, welches von außerhalb eines Gehäuses der Vorrichtung her während des Vorrichtungsbetriebs manuell zugänglich ist. Relativ ist es möglich, eine motorisch betriebene Einstelleinrichtung vorzusehen, die z.B. über ein Bedienpaneel oder Taster betätigt werden kann.

Zwei Abstreifer nach Anspruch 2 vergrößern die Vielfalt der Möglichkeiten bei der Optimierung der Teigband-Qualität durch während des Betriebs erfolgende Abstreifereinstellung. Neben den Andrückwalzen des Abschlusspaares können auch weitere Andrückwalzen der Vorrichtung in ihrer Umfangsposition während des Vorrichtungsbetriebs einstellbare Abstreifer aufweisen.

Unabhängige Einstelleinheiten für die einstellbaren Abstreifer nach Anspruch 3 vergrößern die Möglichkeiten einer Feinjustierung. Alternativ ist es möglich, die Einstelleinrichtung so zu gestalten, dass bei Betätigung eines Einstell-Betätigungselementes mehrere Abstreifer synchron miteinander in ihrer Umfangsposition um die jeweils zugeordnete Andrückwalze verstellt werden.

Eine Einstelleinrichtung nach Anspruch 4 gewährleistet eine optimale Abstreiferfunktion unabhängig von dessen Umfangsposition auf der zugeordneten Andrückwalze.

Ein Ausfiihrungsbeispiel der Erfindung wird nachfolgend anhand der Zeichnungen näher erläutert. In dieser zeigen:
- Fig. 1: eine im Bereich von Andrückwalzen gemäß Line I-I in Fig. 2 geschnittene Seitenansicht einer Teigbandformungseinheit einer Teigband-Erzeugungsvorrichtung, gesehen aus einer Blickrichtung längs der Drehachsen der Andrückwalzen;
- Fig. 2: eine Aufsicht auf die Teigband-Erzeugungsvorrichtung mit der in Fig. 1 dargestellten Teigbandformungseinheit;
- Fig. 3-5: schematisch und aus einer der Fig. 1 entsprechenden Blickrichtung die Teigbandformungseinheit mit verschiedenen Stellungen der Andrückwalzen und von einstellbaren Abstreifern an den Andrückwalzen eines Andrückwalzen-Abschlusspaares der Teigbandformungseinheit; und
- Fig. 6: schematisch und gegenüber den Figuren 3 bis 5 vergrößert die vier Andrückwalzen mit den beiden einstellbaren Abstreifern.

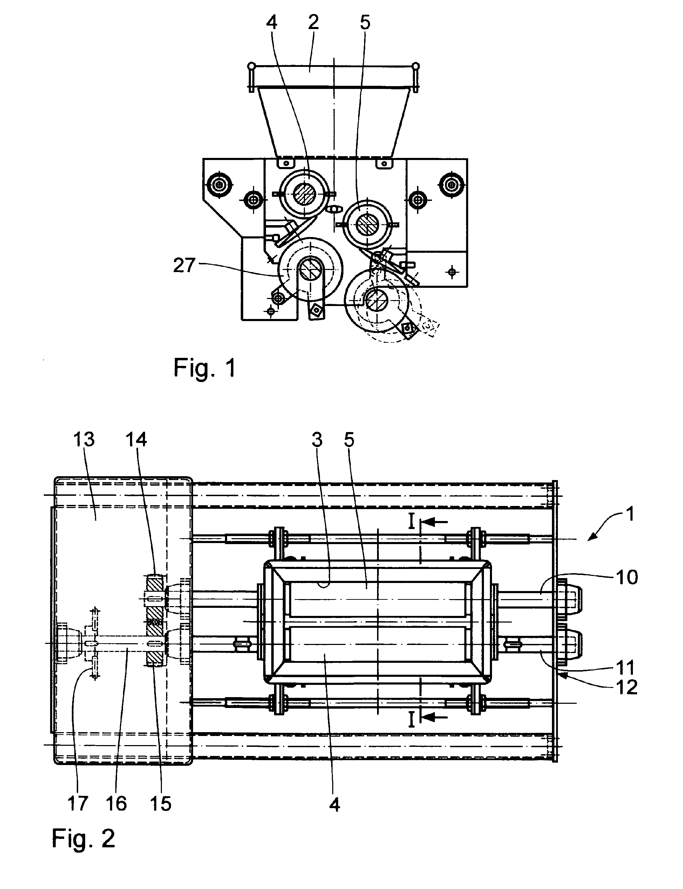

Eine insgesamt in der Fig. 2 dargestellte Teigband-Erzeugungsvorrichtung 1 hat einen nach oben offenen Aufnahmetrichter 2, der als Teigbehälter zur Aufnahme einer Teigmasse dient. Unterhalb einer Bodenöffnung 3 des Teigbehälters 2 sind zwei Paare gegenläufig angetriebener Andrückwalzen 4 bis 7 angeordnet. Das in den Figuren 1 sowie 3 bis 6 obere Paar mit den Andrückwalzen 4 und 5 wird nachfolgend auch als Einlaufpaar 8 bezeichnet. Das in den Figuren 1 sowie 3 bis 6 untere Paar mit den Andrückwalzen 6 und 7 wird nachfolgend auch als Auslauf- oder Abschlusspaar 9 bezeichnet.

Der Antrieb der Andrückwalzen 4 bis 7 wird nachfolgend anhand des Einlaufpaares 8 und den Figuren 1 und 2 beschrieben. Der Antrieb des Abschlusspaares 9 ist entsprechend. Die Andrückwalzen 4, 5 sitzen auf Wellen 10, 11, die beiderseits eines Gehäuses 12 der Teigband-Erzeugungsvorrichtung 1 axial und radial gelagert sind.

Das Gehäuse 12 hat in der Fig. 2 links einen Antriebs-Gehäuseabschnitt 13. In diesen ragen endseitige Wellenstummel der Wellen 10, 11 hinein, die miteinander kämmende Zahnräder 14, 15 tragen. Die Zahnräder 14, 15 sind drehfest mit den Wellen 10, 11 verbunden. Das der Welle 11 zugeordnete Zahnrad 15 sitzt auf einer Übertragungswelle 16, die die Welle 11 in dem Antriebsgehäuseabschnitt 13 fortsetzt und in der Fig. 2 am linken Ende wiederum am Gehäuse 12 gelagert ist.

Drehfest mit der Übertragungswelle 16 verbunden ist ein Kettenrad 17, über welches eine Antriebskette läuft, die über eine nicht dargestellte Antriebswelle von einem ebenfalls nicht dargestellten Antriebsmotor angetrieben ist. Die Drehrichtung des Antriebsmotors ist so, dass sich in der Darstellung der Figuren 1 sowie 3 bis 6 die Andrückwalze 4 im Uhrzeigersinn und die Andrückwalze 5 entgegen dem Uhrzeigersinn dreht. Die Drehrichtung der Antriebswelle des entsprechenden, das Abschlusspaar 9 antreibenden Antriebsmotors ist ebenfalls derart, dass sich in der Darstellung der Figuren 1 sowie 3 bis 6 die Andrückwalze 6 im Uhrzeigersinn und die Andrückwalze 7 entgegen dem Uhrzeigersinn dreht.

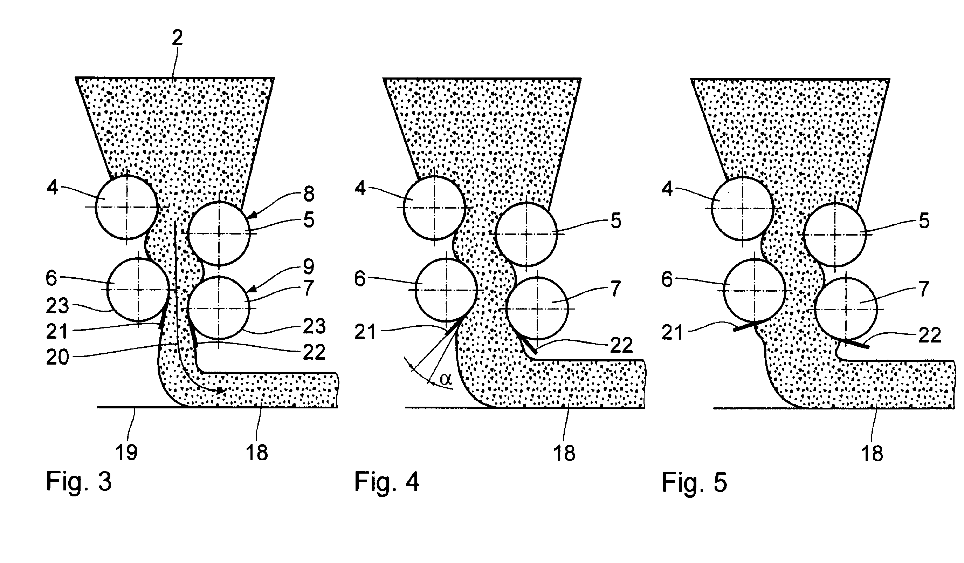

Das Verhältnis der Antriebsgeschwindigkeiten des Einlaufpaars 8 zum Abschlusspaar 9 ist einstellbar vorgebbar. Das Einlaufpaar 8 kann sich mit der gleichen Winkelgeschwindigkeit drehen wie das Abschlusspaar 9. Alternativ ist es möglich, dass sich das Einlaufpaar 8 mit kleinerer oder größerer Winkelgeschwindigkeit bewegt wie das Abschlusspaar 9. Der Abstand der Andrückwalzen 6, 7 des Abschlusspaares 9 zueinander ist verstellbar. Dies kann mit Hilfe eines Antriebes oder manuell geschehen.. Das vorgegebene Verhältnis der Antriebsgeschwindigkeiten der Paare 8, 9 hängt vom Umfangsverhältnis der Andrückwalzen 4 bis 7, dem Abstand der Andrückwalzen 4 bis 7 innerhalb eines Paares 8, 9 zueinander, dem Abstand der Paare 8, 9 zueinander sowie von der Stärke eines Teigbandes 18 (vgl. Figuren 3 bis 5) ab, das mit der Teigband-Erzeugungsvorrichtung 1 erzeugt werden soll.

Nach dem Verlassen des Zwischenraums zwischen den Andrückwalzen 6, 7 des Abschlusspaares 9 wird das zunächst senkrecht nach unten geförderte Teigband 18 in den Figuren 3 bis 5 nach rechts auf eine Fördereinrichtung 19 zur Abförderung des gebildeten Teigbandes 18 umgelenkt. Bei der Fördereinrichtung 19 handelt es sich beispielsweise um das Obertrum eines in bekannter Weise angetriebenen Endlos-Förderbandes.

Den Andrückwalzen 6, 7 des Abschlusspaares 9, das entgegen einer Teigförderrichtung 20 der Fördereinrichtung 19 benachbart angeordnet ist und das Teigband 18 an die Fördereinrichtung 19 übergibt, ist jeweils ein stationärer Abstreifer 21, 22 zugeordnet. Die Abstreifer 21, 22 dienen zum Abstreifen und Glätten des Teigbandes von einer Mantelwand 23 der Andrückwalzen 6, 7.

Jeder Abstreifer 21, 22 hat eine Abstreif-Schneide 24, deren der Mantelwand 23 zugewandte Schneidenwand 25 tangential zur Mantelwand 23 verläuft. Die Schneidenwand 25 hat zur Mantelwand 23 keinen Abstand und folgt dieser praktisch spielfrei.

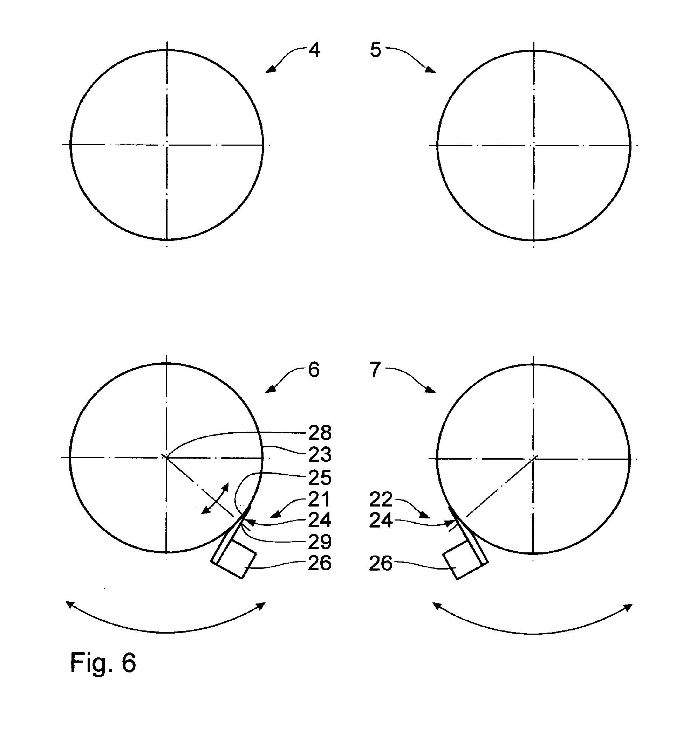

Die Abstreifer-Schneiden 24 der Abstreifer 21, 22 werden jeweils von einem Abstreiferhalter 26 getragen, der in der Fig. 6 dargestellt ist. Jeder Abstreiferhalter 26 ist drehfest mit einer Einstellscheibe 27 (vlg. Fig. 1) verbunden, die wiederum drehbar um eine Rotationsachse 28 der Andrückwalze 6 bzw. 7 gelagert ist. Die Einstellscheibe 27 ist fest mit einem nach außerhalb des Gehäuses 12 geführten Betätigungselement, z.B. einem Handrad, direkt oder indirekt verbunden, über welches eine Umfangsposition 29 des Abstreifers 21 bzw. 22 auf der Mantelwand 23 der Andrückwalze 6 bzw. 7 vorgegeben werden kann. Das Handrad stellt also gemeinsam mit der Einstellscheibe 27 eine Einstelleinrichtung zur Umfangspositionsvorgabe des Abstreifers 21 bzw. 22 auf der Andrückwalze 6 bzw. 7 dar. Diese Einstellung kann während des Betriebs der Teigband-Erzeugungsvorrichtung 1 erfolgen, also während die Andrückwalzen 4 bis 7 rotieren und Teig zur Formung des Teigbandes 18 andrücken.

Alternativ zu einer manuellen Einstellung der Umfangspositionen der Abstreifer 21 bzw. 22 kann auch eine automatische Einstellung erfolgen. In diesem Falle ist die jeweilige Einstellscheibe 27 motorisch um die Rotationsachse 28 drehbar.

Die Einstelleinrichtung kann so mechanisch mit den beiden Einstellscheiben 27 der Abstreifer 21, 22 gekoppelt sein, dass durch Betätigung eines Betätigungselementes beide Abstreifer 21, 22 synchron zueinander in Umfangsrichtung verstellt werden. Alternativ zu einer gemeinsamen Einstellung beider Abstreifer 21, 22 kann die Einstelleinrichtung in zwei voneinander unabhängige Einstelleinheiten unterteilt sein, wobei jede dieser Einstelleinheiten mit einem der beiden einstellbaren Abstreifer 21, 22 verbunden ist. In letzterem Fall ist jeder der beiden Einstellscheiben 27 der beiden Abstreifer 21, 22 ein Betätigungselement, z.B. ein Handrad, zur manuellen Betätigung oder ein eigener Antriebsmotor zugeordnet.

Durch die Verschwenkung des Abstreiferhalters 26 um die Rotationsachse 28 bei der Einstellung der Umfangsposition bleibt ein Winkel, den die Schneidenwand 25 des Abstreifers 21 bzw. 22 mit der benachbarten Mantelwand 23 einschließt, bei der Verstellung konstant. Da bei der dargestellten Ausführungsform die Schneidenwand 25 tangential zur Mantelwand 23 verläuft, ist der konstant gehaltene Winkel bei dieser Ausführung ein rechter Winkel.

Fig. 3 zeigt eine Einstellung der Teigband-Erzeugungsvorrichtung 1 zur Herstellung eines relativ dünnen Teigbandes 18. Die beiden Andrückwalzen 6, 7 des Abschlusspaares 9 haben einen kleinen Abstand zueinander. Der Abstreifer 21 streift die Andrückwalze 6 etwa in Vier-Uhr-Position ab und der Abstreifer 22 streift Andrückwalze 7 etwa in Acht-Uhr-Position ab. Die Stärke des bei der Einstellung nach Fig. 3 hergestellten Teigbandes 18 ist nur geringfügig größer als der Abstand der Andrückwalzen 6, 7 des Abschlusspaares 9.

Fig. 4 zeigt eine Einstellung zur Herstellung eines stärkeren Teigbandes 18. Die Andrückwalzen 6, 7 haben einen im Vergleich zur Einstellung nach Fig. 3 größeren Abstand zueinander. Der Abstreifer 21 streift die Andrückwalze 6 in einer Fünf-Uhr-Position ab. Der Abstreifer 22 streift die Andrückwalze 7 in einer Sieben-Uhr-Position ab. Die Stärke des mit der Einstellung nach Fig. 4 hergestellten Teigbandes 18 ist deutlich größer als der Abstand zwischen den Andrückwalzen 6 und 7.

Fig. 5 zeigt eine Einstellung zur Herstellung eines stärkeren Teigbandes 18 mit einer dem Abschlusspaar 9 nachgeschalteten Teig-Relaxationsphase. Der Abstand der Andrückwalzen 6, 7 in der Einstellung nach Fig. 5 entspricht etwa dem nach Fig. 4. Der Abstreifer 21 streift die Andrückwalze 6 in etwa Sechs-Uhr-Position ab. Der Abstreifer 22 streift die Andrückwalze 7 ebenfalls in etwa Sechs-Uhr-Position ab. Die Rotationsgeschwindigkeiten der Andrückwalzen 6 und 7 des Abschlusspaares 9 und die Fördergeschwindigkeit der Fördereinrichtung 19 sind so aufeinander abgestimmt, dass sich der Teig nach dem Abschlusspaar 9 während einer RelaxationsPhase kurz staut und dabei eine gegenüber dem Abstand der Andrückwalzen 6, 7 deutlich vergrößerte Dicke hat. Diese sich vergrößernde Teigbanddicke bzw. -stärke wird durch die gegenüber der Fig. 4 veränderte Umfangsposition der Abstreifer 21, 22 begünstigt.

Zudem wird durch die Position der Abstreifer 21, 22 eine Glättung des Teigbandes erreicht. Diese Glättung wird durch den Einstellwinkel der Abstreifer 21, 22, also durch deren Umfangsposition auf den Andrückwalzen 6, 7 beeinflusst. Die notwendige Glättung des Teigs wird je nach Teigart vorgegeben. Dem Einstellwinkel fest zugeordnet ist ein Ablösewinkel α zwischen dem Abstreifer 21, 22 und dem abgelösten Teigband 18, der in der Fig. 4 für den Abstreifer 21 dargestellt ist.

Bei einer nicht dargestellten Ausführungsform der Teigbandformungseinheit der Teigband-Erzeugungsvorrichtung 1 können auch die Andrückwalzen 4, 5 des Einlaufpaars 8 in ihrer Umfangsposition verstellbare Abstreifer entsprechend den Abstreifern 21, 22 aufweisen.

Dadurch, dass der Einstellwinkel der Schneidenwand 25 zur Mantelwand 23 erhalten bleibt, ändert sich das Abstreifverhalten der Abstreifer 21, 22 nach der Umstellung in eine andere Umfangsposition nicht.

Jeder Andrückwalze 4 bis 7 kann auch mehr als ein Abstreifer zugeordnet sein. In diesem Fall ist mindestens einer der Abstreifer der Andrückwalzen 6, 7 des Abschlusspaares 9 in seiner Umfangsposition während des Betriebs der Teigband-Erzeugungsvorrichtung 1 verstellbar, wie vorstehend im Zusammenhang mit den Abstreifern 21, 22 beschrieben.

Abweichend vom im Zusammenhang mit den Figuren 1 bis 6 dargestellten Ausführungsbeispiel kann auch nur einer der beiden Abstreifer 21, 22 in seiner Umfangsposition während des Betriebs der Teigband-Erzeugungsvorrichtung 1 einstellbar sein.

## Patentansprüche

1. Vorrichtung (1) zur Erzeugung und Bereitstellung eines kontinuierlichen Teigbandes (18)
- mit einem Teigbehälter (2) zur Aufnahme einer Teigmasse,
- mit mindestens einem Paar (8, 9) von beabstandeten, gegenläufig angetriebenen Andrückwalzen (4-7), zwischen denen die Teigmasse zur Bildung des Teigbandes (18) hindurchgefördert wird,
- mit einer Fördereinrichtung (19) zur Abförderung des gebildeten Teigbandes (18),
- wobei jeder Andrückwalze (4-7) mindestens des Abschlusspaares (9) von Andrückwalzen (6, 7), welches der Fördereinrichtung (19) benachbart ist und das Teigband (18) an die Fördereinrichtung (19) übergibt, jeweils mindestens einen stationären Abstreifer (21, 22) zum Abstreifen von Teig von einer Mantelwand (23) der Andrückwalze (6, 7) zugeordnet ist,
**gekennzeichnet durch** eine Einstelleinrichtung (26, 27), die mit mindestens einem der Abstreifer (21, 22) zur während des Andrückens der Teigmasse erfolgenden Vorgabe einer Umfangsposition des Abstreifers (21, 22) auf der Andrückwalze (6, 7) verbunden ist, an der der Abstreifer (21, 22) Teig von der Andrückwalze (6, 7) abstreift.

2. Vorrichtung nach Anspruch 1, **dadurch gekennzeichnet, dass** beide Andrückwalzen (6, 7) des Abschlusspaares (9) Abstreifer (21, 22) auf weisen, die mit der Einstelleinrichtung (26, 27) verbunden sind.

3. Vorrichtung nach Anspruch 2, **dadurch gekennzeichnet, dass** die Einstelleinrichtung (26, 27) in zwei voneinander unabhängige Einstelleinheiten unterteilt ist, wobei jede Einstelleinheit mit einem der einstellbaren Abstreifer (21, 22) verbunden ist.

4. Vorrichtung nach einem der Ansprüche 1 bis 3, **gekennzeichnet durch** eine Ausgestaltung der Einstelleinrichtung (26, 27) in der Art, dass der mindestens eine Abstreifer (21, 22) so um eine Rotationsachse (28) der ihm zugeordneten Andrückwalze (6, 7) verstellbar ist, dass ein Winkel, den eine Abstreifschneide (25) des Abstreifers (21, 22) mit der benachbarten Mantelwand (23) der ihm zugeordneten Andrückwalze (6, 7) einschließt, bei der Verstellung der Umfangsposition des Abstreifers (21, 22) konstant bleibt.
